# EUROPEAN PATENT APPLICATION

(11) **EP 3 816 633 A1**
(43) Date of publication of application: **05.05.2021**
(21) Application number: 20204557.1
(22) Date of filing: 29.10.2020
(51) Int. Cl.: G01P 3/481, G01P 21/02, G01P 3/48, G01P 3/50, G01P 5/16

(54) **SYSTEM FOR DETECTING THE VELOCITY OF A VEHICLE COMPRISING AT LEAST A PIEZOELECTRIC ELEMENT FIXED TO AT LEAST ONE WHEEL AND AT LEAST ONE ADDITIONAL SENSOR, AND ASSOCIATED METHOD AND COMPUTER PROGRAM**

(30) Priority: 29.10.2019 IN 201941043808
(71) Applicant: ALSTOM Transport Technologies, 93400 Saint-Ouen (FR)
(72) Inventor: GURUSAMY, PALANIKUMAR, 625001 Madurai (IN); BENNI, Jijo, 670308 Kannur (IN); GANESAN, Muniandi, 626001 Virudhunagar (IN)
(74) Representative: Lavoix

(57) **Abstract**

System (20) for detecting the velocity of a vehicle (12), in particular a railway vehicle, the vehicle (12) comprising an axle having a pair of wheels (16), the system (20) comprising at least a piezoelectric element (24) fixed to at least one wheel (16) of the pair of wheels (16) such as to be deformed periodically when the wheels (16) roll on a support surface (18) so as to determine the velocity of the vehicle (12), the system (20) further comprising a verification unit (30) configured to decide whether the output signal provided by the piezoelectric element (24) is valid or faulty, and at least one additional sensor (28) providing output signals allowing to determine the velocity of the vehicle (12) independently from the piezoelectric element (24), the system (20) being configured to determine the velocity of the vehicle (12) based on the output signal(s) provided by the additional sensor(s) (28) when the verification unit (30) decides that the output signals provided by the piezoelectric element (24) are faulty. The verification may involve a determination that the piezoelectric signal is periodically missing, whether there is a contradiction between the piezoelectric signal and the signal of a vibration sensor indicating that the vehicle is moving; the additional speed signal may also be provided by a Pitot sensor.

## Description

The present invention relates to a system for detecting the velocity of a vehicle, in particular a railway vehicle, the vehicle comprising an axle having a pair of wheels configured to roll on a support surface, in particular rails, the system comprising at least a piezoelectric element fixed to at least one wheel of the pair of wheels such as to be deformed periodically when the wheels roll on the support surface so as to determine the velocity of the vehicle.

Each piezoelectric element is deformed periodically during the rotation of the wheel on which the piezoelectric element is mounted with a maximal deformation of the piezoelectric element attained once for each wheel turn, at a specific angular position of the wheel.

It is possible to determine the velocity of the vehicle by setting a threshold for the signal of each piezoelectric element, said threshold being reached once in each wheel turn, and to consider that the wheel has made one turn each time the signal of the piezoelectric element passes above the threshold.

Determining the frequency at which the signal of each piezoelectric element passes above the threshold thus allows determining the number of wheel turn per second and thus the velocity of the vehicle.

The system described above is simple, yet is unable to accurately determine the velocity of the vehicle in certain operational conditions, including:
- 'spin condition': this typically happens at the starting stage of the vehicle when the motor transmits a high level of torque to the wheels, which exceeds the maximal friction between the wheels and the rail so that the wheels simply spin without driving the vehicle forward. The piezoelectric element, however, would wrongly indicate that the velocity of the vehicle is high, for example higher than 10 km/h, and not equal to zero;
- 'flat wheel condition': due to the wear of the tread of the wheel, a flat portion may appear radially facing a piezoelectric element attached to the wheel such that the deformation of the piezoelectric element is no longer sufficient to obtain an output signal of the piezoelectric element higher than the threshold;
- 'slide condition': this usually takes place in the stopping stage of the train when the wheels may slide on the rails, and the vehicle is simply dragged along the rail. In the 'slide condition', the velocity detecting system would consider that the vehicle is not moving or moving at a relatively low speed while in reality the velocity could be much higher;
- 'hot wheel condition': the signal from the piezoelectric element usually decreases when its temperature rises. When the wheels are heated excessively, for example higher than 200 °C, the output signal of the piezoelectric element could decrease to the extent that the output signal stays below the threshold.

An objective of the present invention is to ensure accurate measures of the velocity of the vehicle, even when abnormal operational conditions occur.

To that end, the present invention discloses a system for detecting the velocity of a vehicle, in particular a railway vehicle, the vehicle comprising an axle having a pair of wheels, the system comprising at least a piezoelectric element fixed to at least one wheel of the pair of wheels such as to be deformed periodically when the wheels roll on a support surface so as to determine the velocity of the vehicle, the system further comprising a verification unit configured to decide whether the output signal provided by the piezoelectric element is valid or faulty, and at least one additional sensor providing output signal(s) allowing to determine the velocity of the vehicle independently from the piezoelectric element, the system being configured to determine the velocity of the vehicle based on the output signal(s) provided by the additional sensor(s) when the verification unit decides that the output signal(s) provided by the piezoelectric element is faulty.

The system according to the invention may comprise any or several of the following features, taken individually or according to any technically possible combination:
- the additional sensor is a pitot tube fixed to the vehicle and/or a vibration sensor.
- the vibration sensor is configured for sensing vibrations when the vehicle is moving along the support surface, the vibration sensor being unable to detect vibrations when the vehicle is stationary.
- the verification unit is configured to decide that the output signal provided by the piezoelectric element at a given instant is faulty when the velocity determined based on the output signal provided by the piezoelectric element is higher than a threshold speed, for example 10 km/h, and the vibration sensor did not detect vibrations for a period of time before the given instant, the system being configured to, under this circumstance, determine the velocity of the vehicle based on the output signal(s) provided by the vibration sensor.
- the verification unit is configured to decide that the output signals provided by the piezoelectric element is faulty when the output signals provided by the piezoelectric element is missing periodically, the system being configured to, under this circumstance, determine the velocity of the vehicle based on the output signal(s) provided by the additional sensor(s).
- the verification unit is configured to verify the output signal(s) provided by the piezoelectric element by comparing the output signal(s) with a predetermined threshold, the threshold corresponding preferentially to 90% of the level of output signal(s) provided by the piezoelectric element when the vehicle is travelling under normal operation.
- the verification unit is configured to decide that the output signals provided by the piezoelectric element is faulty when the output signal(s) remain constant or zero and the additional sensor is able to detect vibrations, the system being configured to, under this circumstance, determine the velocity of the vehicle based on the output signals provided by the additional sensor(s).
- the verification unit is configured to decide that the output signals provided by the piezoelectric element is faulty when the difference between the output signal(s) provided by the piezoelectric element and the predetermined threshold is lower than 2 V or the estimated temperature determined for the piezoelectric element correlating the output signal(s) voltage with a voltage-temperature database is higher than a predetermined temperature threshold, the system being configured to, under this circumstance, determine the velocity of the vehicle based on the output signals provided by the additional sensor(s).The present invention also relates to a method for detecting the velocity of a vehicle wherein the method comprises:
- the determination on whether the output signal(s) provided by the piezoelectric element is valid or faulty by the verification unit, and
- when the verification unit decides that the output signal(s) provided by the piezoelectric element is faulty, the determination of the velocity of the vehicle independently from the piezoelectric element based on the output signal(s) provided by the additional sensor(s).

The present invention further relates to a computer program comprising instructions which, when the program is executed by a computer, cause the computer to carry out the method for detecting the velocity of a vehicle.

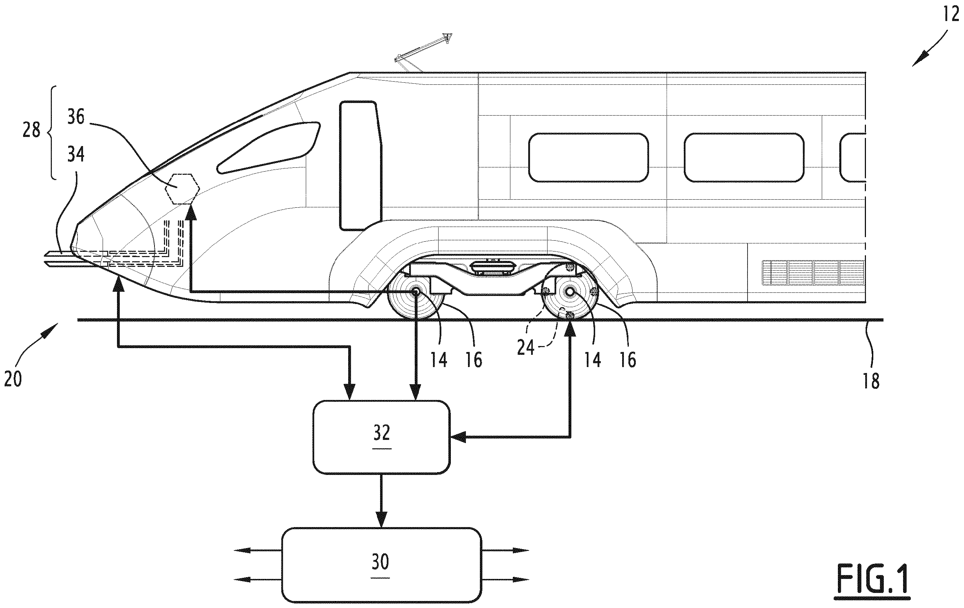

The invention will be better understood by reading the following description, provided only as way of example, and given with reference being made to the enclosed drawing on which the unique Figure 1 is a schematic representation of a system for detecting the velocity of a vehicle.

The Figure 1 illustrates a vehicle 12, in particular a railway vehicle. The vehicle 12 comprises at least one axle 14 comprising a pair of wheels 16. Two axles 14 are visible on the Figure 1.

The wheels 16 are configured to roll on a support surface 18, in particular rails of a railway track.

The vehicle 12 also comprises a system 20 for detecting the velocity of the vehicle 12 along the support surface 18, in particular along the railway.

The system 20 comprises at least one piezoelectric element 24 fixed to at least one wheel 16 of the pair of wheels 16. Preferably, the system 20 comprises a plurality of piezoelectric elements 24 distributed on the circumference of the wheel 16, preferably with a uniform distribution.

Each piezoelectric element 24 is positioned to be deformed periodically when the corresponding wheel 16 rolls on the support surface 18 so as to determine the velocity of the vehicle 12.

The system 20 comprises at least one additional sensor 28 configured to provide output signals allowing to determine the velocity of the vehicle 12 independently from the piezoelectric element 24.

The system 20 comprises a verification unit 30 configured to decide whether the output signal provided by the piezoelectric element 24 is valid or faulty.

The system 20 is configured to determine the velocity of the vehicle 12 based on the output signal provided by the additional sensor(s) 28 when the verification unit 30 decides that the output signal provided by the piezoelectric element 24 is faulty.

Preferably, the system 20 comprises a sensor signal conditioning unit 32 configured to receive the output signal from the piezoelectric element 24 and/or the output signal(s) of the additional sensor(s) 28.

The system 20 further comprises a voltage-temperature database (non-represented on the Figure) of the piezoelectric element(s) 24.

Each piezoelectric element 24 is able to generate an output signal including a pulse when deformed due to the wheel 16 rolling on the support surface 18. Each pulse of the output signal of the piezoelectric element 24 corresponds to one rotation of the wheel 16.

According to the embodiment represented on the Figure, the system comprises a plurality of piezoelectric elements 24 angularly distributed on the wheel 16. The plurality of piezoelectric elements is connected in parallel so that the single signal conditioning circuit is sufficient overall.

According to this embodiment, one reference piezoelectric element is longer than the other piezoelectric elements and able to generate a longer pulse.

This allows to distinguish the position of the wheel 16 with reference to this longer reference piezoelectric element 24. In an alternative, the reference piezoelectric element is shorter than the other piezoelectric elements.

The additional sensor(s) 28 comprise for example a pitot tube 34 fixed to the vehicle 12 and/or a vibration sensor 36.

In one embodiment, the system 20 comprises both the pitot tube 34 and the vibration sensor 36. The sensor signal conditioning unit 32 is then configured to receive output signals from the pitot tube 34 and/or the vibration sensor 36.

The pitot tube 34 is adapted for providing an output signal indicative of the flow velocity of the air relative to the vehicle.

The pitot tube 34 is accurate for relatively high velocities, for example higher than 60 km/h.

The pitot tube 34 is for example mounted on the vehicle 12 facing forward to the income airflow when the vehicle 12 is moving.

The vibration sensor 36 is adapted for providing an output signal indicative of vibrations of the vehicle, which are generally correlated to the velocity of the vehicle, a higher velocity being correlated to higher vibrations.

The vibration sensor 36 is accurate for detecting relatively low velocities, for example lower than 60 km/h.

The vibration sensor 36 is for example placed in the driver's cabin of the vehicle 12. The vibration sensor 36 is e.g. able to detect vibrations in all three directions of the vehicle 12 (longitudinal, transversal, and vertical directions).

The vibration sensor 36 does not detect vibrations when the vehicle 12 is stationary.

Preferably, the system 20 comprises a speed-vibration database (non-represented on the Figure) of the vibration sensor 36 comprising the correlation between the vibration pattern (for example amplitude on all three directions) and the speed of the vehicle 12.

The system 20 is therefore able to correlate the vibration detected by the vibration sensor 36 to the velocity of the vehicle 12.

A method of correlation that can be used is described in more detail in the article *'Train speed calculation using ground vibrations'* by Georges Kouroussis, David P Connolly, Mike C Forde, and Olivier Verlinden.

In one exemplary embodiment, the verification unit 30 is configured to decide that the output signal provided by the piezoelectric element 24 at a given moment is faulty when the velocity determined based on the output signals provided by the piezoelectric element 24 is higher than a threshold, e.g. 10 km/h and the vibration sensor 36 has not detected vibrations for a period of time preceding the given moment.

This corresponds to the spin condition as explained above. The spin condition is mostly likely to occur during the starting stage of the vehicle 12.

In one embodiment, the vibration sensor 36 provide a sampled output signal and the said period of time preceding the given moment corresponds for example to a fixed number of samples preceding the given moment, e.g. the last ten samples of output signal of the vibration sensor 36.

Under this circumstance, the system 20 is for example configured to determine the velocity of the vehicle 12 based on the output signal provided by the vibration sensor 36.

In one exemplary embodiment, the verification unit 30 is configured to decide that the output signal provided by the piezoelectric element 24 is faulty when the output signal of the piezoelectric element 24 is missing periodically. This corresponds e.g. to the flat wheel condition as explained above.

Under this circumstance, the system 20 is for example configured to determine the velocity of the vehicle 12 based on the output signal(s) provided by the additional sensor(s) 28.

In addition, when the system 20 comprises at least one piezoelectric element 24 longer or shorter than other piezoelectric elements 24, the system 20 is able to determine the position of the missing parts of the wheel based on the positions of the missing signal from the normal piezoelectric element(s) 24 and the signal from the longer piezoelectric element(s) 24.

The verification unit 30 is configured to verify the output signal provided by the piezoelectric element 24 by comparing the output signal with a predetermined threshold.

The threshold corresponds e.g. to 90% of the maximum level of output signal provided by the piezoelectric element 24 when the vehicle 12 is travelling under normal conditions, i.e. without anomalies such as 'spin condition', 'flat wheel condition', 'slide condition', and 'hot wheel condition' mentioned above. The threshold aims to eliminate noise and disturbances.

In one embodiment, the verification unit 30 is configured to decide that the output signal provided by the piezoelectric element 24 is faulty when the output signal remains constant or zero and the vibration sensor 36 detects vibrations. This corresponds to the slide condition explained above. The slide condition is mostly likely to occur during the stopping stage of the vehicle 12.

Under this circumstance, the system 20 is for example configured to determine the velocity of the vehicle 12 based on the output signal(s) provided by the additional sensor(s) 28. As the pitot tube 34 and the vibration sensor 36 are unaffected by the slide condition, they are able to measure the velocity of the vehicle 12.

In one exemplary embodiment, the verification unit 30 is configured to decide that the output signal provided by plurality of the piezoelectric elements 24 is faulty when the difference between the output signal provided by the piezoelectric element 24 and the predetermined threshold is lower than 2 V. This corresponds to the hot wheel condition mentioned above. This situation takes place for example when the piezoelectric element 24 exceeds 200 °C. For the range of temperature values, the voltage-temperature database comprises the correlation between the output signal provided by the piezoelectric element and the temperature pattern.

Under this circumstance, the system 20 is configured to determine the velocity of the vehicle 12 based on the output signal(s) provided by the additional sensor(s) 28.

Preferably, the verification unit 30 continuously monitors the actual output signal of the piezoelectric element 24, and the system 20 compares this output signal with the presumed output signal from the piezoelectric element 24 under the current temperature.

The verification unit 30 is able to raise signals if it is deemed that the hot wheel condition takes place.

The sensor signal conditioning unit 32 comprises for example a pulse detector and a pulse counter circuit. The pulse counter circuit is able to count the number of pulses it receives from each piezoelectric element 24. The verification unit 30 determines the velocity of the vehicle 12 using the wheel's circumference, the total number of pulses per wheel revolution (which is a function of the number of piezoelectric elements 24 distributed over the circumference of the wheels) and the number of pulses received between two successive samples.

The sensor signal conditioning unit 32 comprises for example a pressure to current converter and a current measurement circuit. The pressure to current converter is able to convert pressure signal it receives from the pitot tube 34 into a current signal. The verification unit 30 determines the velocity of the vehicle 12 using e.g. a predetermined calibration curve or a predetermined calibration table which indicates the velocity of the vehicle as a function of the current signal which is generated as a function of the pitot tube pressure. The predetermined calibration curve or table is formed e.g. via calibration measurments and a curve fitting approach.

The sensor signal conditioning unit 32 comprises for example dominant frequency analyser. The dominant frequency analyser is able to calculate the dominant frequency of vibration signal it receives from vibration sensor 36 between two successive sampling intervals. The verification unit 30 determines the vibration dominant frequency equivalent of velocity of the vehicle 12 by using speed-vibration database. A method for detecting the velocity of a vehicle 12 using the system 20 as disclosed above will now be explained.

When the vehicle 12 is rolling on the support surface 18, for example a railway vehicle rolling on rails of a railway track, if the verification unit 30 decides the output signals provided by the piezoelectric element are valid, the system 20 determines the velocity of the vehicle 12 based on the output signal(s) provided by the piezoelectric element(s) 24.

In contrast, if the verification unit 30 decides that the output signal(s) provided by the piezoelectric element(s) 24 is(are) faulty, typically in one of the spin condition, flat wheel condition, slide condition, and hot wheel condition, the system 12 then determines the velocity of the vehicle 12 independently from the piezoelectric element(s) 24, based on the output signal(s) provided by the additional sensor(s) 28.

Owing to the invention disclosed above, even under abnormal operational conditions of the vehicle 12, its velocity could be accurately determined using the independent output signals provided by the additional sensor(s) 28.

A computer program that carries out the method for detecting the velocity of the vehicle 12 as disclosed above will now be explained.

The computer program comprises instructions which, when the program is executed by a computer, cause the computer to carry out the method as disclosed above.

## Claims

1. System (20) for detecting the velocity of a vehicle (12), in particular a railway vehicle, the vehicle (12) comprising an axle having a pair of wheels (16), the system (20) comprising at least a piezoelectric element (24) fixed to at least one wheel (16) of the pair of wheels (16) such as to be deformed periodically when the wheels (16) roll on a support surface (18) so as to determine the velocity of the vehicle (12), the system (20) further comprising a verification unit (30) configured to decide whether the output signal provided by the piezoelectric element (24) is valid or faulty, and at least one additional sensor (28) providing output signal(s) allowing to determine the velocity of the vehicle (12) independently from the piezoelectric element (24), the system (20) being configured to determine the velocity of the vehicle (12) based on the output signal(s) provided by the additional sensor(s) (28) when the verification unit (30) decides that the output signal(s) provided by the piezoelectric element (24) is faulty.

2. System (20) for detecting the velocity according to claim 1, wherein an additional sensor (28) is a pitot tube (34) fixed to the vehicle (12) and/or a vibration sensor (36).

3. System (20) for detecting the velocity according to claim 2, wherein the vibration sensor (36) is configured for sensing vibrations when the vehicle (12) is moving along the support surface (18), the vibration sensor (36) being unable to detect vibrations when the vehicle (12) is stationary.

4. System (20) for detecting the velocity according to claim 3, wherein the verification unit (30) is configured to decide that the output signal provided by the piezoelectric element (24) at a given instant is faulty when the velocity determined based on the output signal provided by the piezoelectric element (24) is higher than a threshold speed, for example 10 km/h, and the vibration sensor (36) did not detect vibrations for a period of time before the given instant, the system (20) being configured to, under this circumstance, determine the velocity of the vehicle (12) based on the output signal(s) provided by the vibration sensor (36).

5. System (20) for detecting the velocity according to any one of claims 2 to 4, wherein the verification unit (30) is configured to decide that the output signals provided by the piezoelectric element (24) is faulty when the output signals provided by the piezoelectric element (24) is missing periodically, the system (20) being configured to, under this circumstance, determine the velocity of the vehicle (12) based on the output signal(s) provided by the additional sensor(s) (28).

6. System (20) for detecting the velocity according to any one of the preceding claims, wherein the verification unit (30) is configured to verify the output signal(s) provided by the piezoelectric element (24) by comparing the output signal(s) with a predetermined threshold, the threshold corresponding preferentially to 90% of the level of output signal(s) provided by the piezoelectric element (24) when the vehicle (12) is travelling under normal operation.

7. System (20) for detecting the velocity according to claim 6, wherein the verification unit (30) is configured to decide that the output signals provided by the piezoelectric element (24) is faulty when the output signal(s) remain constant or zero and the additional sensor (36) is able to detect vibrations, the system (20) being configured to, under this circumstance, determine the velocity of the vehicle (12) based on the output signals provided by the additional sensor(s) (28).

8. System (20) for detecting the velocity according to claim 6, wherein the verification unit (30) is configured to decide that the output signals provided by the piezoelectric element (24) is faulty when the difference between the output signal(s) provided by the piezoelectric element (24) and the predetermined threshold is lower than 2 V or the estimated temperature determined for the piezoelectric element correlating the output signal(s) voltage with a voltage-temperature database is higher than a predetermined temperature threshold, the system (20) being configured to, under this circumstance, determine the velocity of the vehicle (12) based on the output signals provided by the additional sensor(s) (28).

9. Method for detecting the velocity of a vehicle (12) using the system (20) according to any one of the claims 1 to 8, wherein the method comprising:
- determination on whether the output signal(s) provided by the piezoelectric element (24) is valid or faulty by the verification unit (30), and
- when the verification unit (30) decides that the output signal(s) provided by the piezoelectric element (24) is faulty, determination of the velocity of the vehicle (12) independently from the piezoelectric element (24) based on the output signal(s) provided by the additional sensor(s) (28).

10. A computer program comprising instructions which, when the program is executed by a computer, cause the computer to carry out the method of claim 9.
